# EUROPEAN PATENT SPECIFICATION

(11) **EP 4 364 882 B1**
(45) Date of publication and mention of the grant of the patent: **23.07.2025**
(21) Application number: 23208061.4
(22) Date of filing: 06.11.2023
(51) Int. Cl.: B23K 26/38, B23K 37/053, B23K 101/06

(54) **CUTTING MACHINE AND RELATIVE CLAMPING UNIT**
SCHNEIDEMASCHINE UND ZUGEHÖRIGE SPANNEINHEIT
MACHINE DE COUPE ET UNITÉ DE SERRAGE ASSOCIÉE

(30) Priority: 07.11.2022 IT 202200022842; 07.11.2022 IT 202200022848
(43) Date of publication of application: 08.05.2024
(73) Proprietor: AEK S.r.l., 61010 Tavullia (PG) (IT)
(72) Inventor: NOBILI, Diego, 47841 CATTOLICA (RN) (IT); NOBILI, Fabio, 47842 SAN GIOVANNI IN MARIGNANO (RN) (IT)
(74) Representative: Scipioni, Luca

(56) References cited:
- CN-B- 105 014 295
- KR-A- 20220 130 965
- US-A- 5 744 778

## Description

The present invention relates to a clamping unit and a working unit for a cutting machine for cutting tubular components. The present invention relates to a laser cutting machine.

In the field related to the machines for laser cutting tubular components, it is known that there are three parts of the machine: a clamping unit, a centring unit and a working unit.

The tubular component is clamped on the clamping unit, which is rotatable and entrains the tubular component in the rotation thereof about an axis of rotation. The centring unit is spaced from the clamping unit along the axial direction, parallel to the axis of rotation, and comprises centring elements for supporting the tubular component. Finally, the working unit comprises a laser head for performing the cutting machining on the tubular component. The working unit is spaced along the axial direction from the centring unit, which, therefore, is substantially axially interposed between the clamping unit and the working unit.

These types of machines are very complex machines and require very high machining precision. For example, the known machines suffer from a drawback related to the physiological bending of the tubular component about the main axis of extension thereof. Furthermore, in addition to the issue related to bending, the tubular component can also be made not perfectly straight and/or symmetrical. In fact, in the known machines, the tubular component is detected at the centring unit, allowing it to be located at such an axial height. However, since the working unit is configured for performing multiple machinings, often axially spaced apart from each other, this implies that some machinings are carried out in a zone which is distant from the location of the piece, in which the irregularity of the component or the bending thereof entails the execution of the machining in an incorrect zone of the component and which may irreparably compromise the quality of the resulting semi-finished product.

There are also other drawbacks, mainly related to the known clamping units. In fact, in the known clamping units, clamping elements are made which, as the clamping force increases, due to the strength of the component, tend to deform and, as a result of their deformation, there is a change in the direction of the clamping force. In particular, the force does not remain completely axial but acquires an axial component in output from the clamping unit, which, therefore, reduces the clamping efficiency and, conversely, the safety of the machine.

Solutions like those disclosed above are mentioned in the following documents: CN105014295B, which discloses the preamble of claims 1 and 13, KR20220130965A and US5744778A.

The object of the present invention is to provide a cutting machine for cutting tubular components including a clamping unit, a working unit and a centring unit, as well as the units themselves taken individually, which overcome the drawbacks of the prior art cited above.

Said object is fully achieved by the cutting machine for cutting tubular components and by the relative clamping unit, working unit and centring unit, objects of the present invention, which is characterized by what is contained in the claims below.

According to an aspect of the present description, the present invention provides a clamping unit for a cutting machine for cutting a tubular component.

It should be noted that preferably, the cutting machine uses a laser cut but the present invention can also be extended to other types of cutting, for example mechanical, or pressurized water.

The clamping unit comprises a clamping chuck, configured for rotating about a respective axis of rotation. The clamping chuck is configured for keeping the tubular component clamped. The clamping chuck is configured for entraining the tubular component. The clamping chuck comprises a body.

The clamping unit comprises a rotary actuator, configured for setting the clamping chuck in rotation.

The clamping unit comprises a plurality of clamping tools, each including a first end, connected to the clamping chuck (to the body of the clamping chuck), and a second end, free and opposite the first end along an axial direction parallel to the axis of rotation.

The tools of said plurality are movable towards and away from each other (at least) along a radial direction perpendicular to the axis of rotation. It should be noted that, in an embodiment, the mutual movement of the clamping tools can include a radial component and an axial component.

More in detail, each tool is movable between a respective rest position, in which the tool is radially spaced from the axis of rotation by a first distance, and a working position (also indicated in the text indistinctly with the term clamping position), in which the tool engages the tubular component and is spaced from the axis of rotation by a second distance, smaller than the first. The clamping unit comprises a clamping actuator, configured for moving said plurality of tools along the radial direction.

According to an aspect of the present description, each tool is configured for applying a clamping force on the tubular component including at least one component along the axial direction, having a clamping sense, towards the inside of the chuck.

The clamping sense can also be defined as the sense oriented from the second end to the first end of the clamping tool. According to a further definition of the clamping sense, the latter is the sense oriented by the clamping tool towards the body of the clamping chuck.

The fact of having a clamping tool, the force of which contributes to pushing the tubular component towards the chuck, considerably increases the clamping of the component and the stability thereof. This translates into a greater safety of the operations and an increased quality of the operations, due to the stability of the piece which is subjected to the machining (for example, elliptical or eccentric movements deriving from a poor clamping of the piece are avoided). Furthermore, this avoids axial displacements of the component in a sense exiting from the chuck.

According to an aspect of the present description, each clamping tool comprises a respective contact element, configured for contacting the tubular component. Each contact element has a main axis of extension which, in the clamping position of the respective clamping tool, is convergent with the axis of rotation in the clamping sense.

In one embodiment, the contact element is configured for following a circular and/or inclined trajectory with respect to the axis of rotation, so as to be able to discharge the clamping force also on an axial component. The circular trajectory is such that the direction of rotation causes the contact element to move closer to the clamping chuck. Likewise, the inclined trajectory is such as to determine an approach of the contact element to the clamping chuck. This specific technical solution is an example of how the radial movement of the clamping tool can translate, on the tubular component, into an axial force. This solution is particularly effective in terms of constructional simplicity and handling of the clamping tools.

There are however other solutions for breaking down the clamping force, for example, according to an aspect of the present description, in the movement between the rest position to the working position, each clamping tool performs a displacement having an axial component in the clamping sense. In contrast, according to such an embodiment, in the movement thereof from the working position to the rest position, each clamping tool performs a displacement having an axial component in a release sense, opposite the clamping sense.

Moving along a direction not perpendicular to the axis of rotation, each clamping tool will have a non-perpendicular force directrix and, therefore, including an axial component.

This solution, while requiring more complex handling solutions, has however the advantage of breaking down the clamping force more effectively.

In one embodiment, each clamping tool is hinged to the body of the chuck at a respective first hinge. This allows it to rotate between the respective rest position and the respective clamping position about a respective tangential axis, perpendicular to the axis of rotation and to the radial direction.

This embodiment allows to obtain a compound axial and radial movement with a simple rotation, therefore it allows to move the clamping elements in a relatively easy manner.

In one embodiment, each contact element is connected to a respective drive rod. The drive rod is movable (at least) along the axial direction by the effect of the clamping actuator. A displacement of each drive rod causes a corresponding rotation of the respective contact element about the corresponding first hinge.

The drive rod allows to dislocate the actuator in a zone distal from the contact element, to optimize the space necessary for clamping the tubular component.

In one embodiment, for each drive rod, the clamping unit comprises a respective slideway, configured for guiding an axial displacement of the drive rod.

The guide allows to have a more controlled displacement of the rod and avoids a bending due to a possible peak load of the drive rod.

Furthermore, preferably, for each drive rod, the clamping unit comprises a respective connecting rod, connected to the contact element and to the sliding rod, to convert an axial displacement of the drive rod into a rotation of the contact element. The connecting rod allows to keep the conversion system of the axial movement more compact.

According to a preferred embodiment, each drive rod comprises a first end, connected to the respective contact element (i.e., to the respective connecting rod), and a second end, connected to the clamping actuator to receive the movement.

In one embodiment, each drive rod comprises a bearing, positioned in the first end thereof. The bearing slides inside the respective guide to facilitate a sliding of the rod along the axial direction.

According to an embodiment, the clamping unit comprises an adjustment unit. The adjustment unit includes an adjustment actuator. The adjustment unit is configured for adjusting the rest position of each clamping tool.

That is, the clamping actuator is configured for moving the clamping tool by a predetermined travel, defined by the displacement performed between the rest position and the working position. Therefore, displacing the rest position, when the clamping tool is driven by the clamping actuator, the working position and, therefore, in other words, the radial position which the contact element of each clamping tool will reach will also be varied.

Therefore, the presence of the adjustment unit allows, with a clamping actuator having a predetermined travel, to be able to manage a very large dimensional range of the tubular components, increasing the flexibility of the clamping unit.

According to an embodiment, the adjustment unit is configured for selectively (i.e., independently, i.e., in an independent manner, i.e., individually) adjusting the working position of each clamping tool. That is, the clamping unit, by means of the adjustment unit, allows the rest position of each clamping tool to be selectively varied.

Consequently, the distance from the axis of rotation of the contact element of each clamping tool can also be different, thereby allowing to be able to operate also on non-axially symmetric (tubular) components.

For example, in an embodiment, each drive rod comprises an engagement element, arranged at the second end thereof. The adjustment actuator comprises a corresponding coupling element, configured for coupling with the engagement element of each drive rod. The adjustment actuator is movable (i.e., reconfigurable) to be able to selectively couple (therefore to be able to couple the coupling element) with the engagement element of each drive rod. Thereby, the adjustment actuator can selectively displace the drive rod, to vary the rest position of the corresponding clamping tool. That is, the adjustment actuator is configured for moving the clamping tool (i.e., the drive rod) to vary a mutual position (the rest position) between the clamping tool (i.e., the drive rod) and the clamping actuator.

Thereby, it is thus possible to provide a radial phase shift between the clamping elements, i.e., in the embodiment in which the drive rods are present, an axial phase shift between the drive rods.

In one embodiment, the clamping unit comprises a calibrating unit. The calibrating unit comprises a calibration sensor, configured for detecting when each clamping tool reaches a reference position.

The calibrating unit is configured for sending a reset signal to a control unit of the cutting machine. The reset signal is representative of a specific clamping tool having reached the reference position. The control unit is configured for associating a coordinate corresponding to the reference position with the respective clamping tool, for example the zero of the axial coordinate.

This system allows, cyclically, to be able to reset the radial coordinate of the clamping tool when it is detected in a radial limit position, avoiding the accumulation of measurement errors which could compromise the correct adjustment of the rest position by the adjustment unit. Similarly, in the presence of the drive rods, the system allows, cyclically, to reset the axial coordinate of the drive rod when it is detected in an axial limit position, avoiding the accumulation of measurement errors which could compromise the correct adjustment of the rest position by the adjustment unit.

In one embodiment, the clamping actuator is an abutment actuator.

The term "abutment actuator" means an actuator in which the movement is interrupted as a result of reaching a mechanical abutment and not for reaching a threshold power value. The clamping actuator comprises a start position, corresponding to the rest position of said plurality of clamping tools, and an abutment position, corresponding to the clamping position of said plurality of clamping tools, so as to define a maximum radial travel of said clamping tools. It is clear that, if the tubular component has a deformation resistance such that the maximum power deliverable by the clamping actuator is delivered before reaching the preset travel, the clamping tool stops first, deforming the component less but still maintaining a very high clamping force.

On the other hand, however, this solution allows to avoid an unpleasant disadvantage of the prior art, in which the clamping elements reach the working position upon reaching a certain applied force. In fact, in this case, not perfectly knowing the deformation resistance of the component, there is a risk of reaching high deformations with the same clamping force and therefore of ruining the component or misaligning it with respect to the axis of rotation. In the above solution, the maximum travel is ensured by the abutment and, therefore, no unexpected deformation can occur.

Therefore, said clamping tool is configured for positioning the clamping tools in the clamping position with the clamping actuator in the abutment position or with the clamping actuator delivering the maximum deliverable power.

In one embodiment, the clamping unit comprises a detecting unit. The detecting unit is configured for detecting the presence of the tubular component in a clamping zone of the chuck.

The detecting unit is configured for generating a presence signal, representative of the presence of the tubular component in the clamping zone. The detecting unit is configured for sending the presence signal to the control unit of the cutting machine.

Thus, the clamping actuator is configured for receiving an enabling signal from said control unit, to enable or inhibit the actuation thereof based on the presence signal.

This allows to not perform a clamping in the absence of the tubular component in the clamping zone.

Preferably, the clamping unit comprises a sensor, configured for detecting the variation of a physical parameter, for example for detecting a contact. Preferably, the clamping unit comprises an activating element, configured for varying a configuration thereof in response to the positioning of the tubular component in the clamping zone. For example, the activating element could be a mechanical lever, which, in response to the positioning of the tubular component, performs a rotation moving into contact with the sensor and indirectly conveying the information about the presence of the tubular component in the clamping zone.

In one embodiment, the chuck comprises a suction manifold. The chuck comprises a suction shaft. The suction shaft is preferably passing through the suction manifold. The suction shaft comprises a discharge hole, axially aligned with the suction manifold, for discharging the cutting waste into the suction manifold.

This allows a compact waste suction solution.

According to an aspect of the present description, the present invention provides a working unit for a (preferably laser) cutting machine for cutting a tubular component.

The working unit is movable along the axial direction (i.e., along a direction parallel to the axis of rotation of the clamping unit).

The working unit comprises a cutting device. The cutting device preferably comprises an electromagnetic wave emitter (e.g., a laser emitter). The emitter is configured for emitting a cutting wave directed towards the tubular component.

The cutting device is movable along a radial direction, perpendicular to the axial direction, towards and away from the tubular component.

The working unit can comprise a control unit, configured for controlling a movement of the cutting device. The control unit can, alternatively, be part of the laser cutting machine. The working unit comprises a detecting unit. The detecting unit includes at least one sensor, configured for capturing a detection signal. The sensor can be an optical sensor or a laser sensor.

In one embodiment, the detection signal is representative of a distance along a detecting direction of said at least one sensor from the tubular component. In an alternative or additional embodiment, the detection signal is representative of a position of the tubular component with respect to the cutting device.

Advantageously, the detecting unit is integrally movable with the cutting device along the axial direction, to perform a detection at the axial coordinate in which the cutting device operates.

The fact that the detecting unit is integral with the cutting device in the axial movement thereof is very important because it allows to detect the position of the piece at the axial coordinate in which the cutting device is operating, thus allowing a correct positioning of the cut. This avoids the errors due to the simplification related to the fact that the tubular component is considered perfectly straight and centred.

The control unit is configured for receiving the detection signal from the detecting unit.

The control unit is configured for generating a command signal as a function of the detection signal. The control unit is configured for sending the command signal to the cutting device to command a movement thereof.

According to an embodiment, said at least one sensor defines a first sensor of the detecting unit, configured for detecting a first distance signal, representative of a distance of the first sensor from the tubular component along a first detecting direction.

Furthermore, the detecting unit can comprise a second sensor, configured for detecting a second distance signal, representative of a distance of the second sensor from the tubular component along a second detecting direction.

Preferably, the control unit is programmed to derive an actual position of the tubular component based on the first and the second distance signal.

This allows to further increase the accuracy in detecting the position of the tubular component.

In one embodiment, the first and the second direction are perpendicular to each other. This allows to use simple distance sensors to determine, with respect to the axis of rotation of the clamping unit, the distance of a first wall of the tubular component and of a second wall of the tubular component, perpendicular to the first, thereby identifying the position of the piece, in particular for axially symmetrical pieces.

According to an aspect of the present description, the detecting unit comprises a detecting frame. The detecting frame is configured for housing (being connected to) said first sensor and said second sensor. Preferably, the detecting frame is configured for being arranged, in use, around the tubular component. When we use the term "around," we mean that the detecting frame surrounds at least two sides of the tubular component, for example, but not limitedly, as if it were in the shape of an "L", "C", "U" or "O", in this case completely surrounding the tubular component.

In this regard, the detecting frame comprises a first detection side, facing, in use, a first side of the tubular component and on which the first sensor is positioned.

Furthermore, preferably, the detecting frame comprises a second detection side, facing, in use, a second side of the tubular component and on which the second sensor is positioned, the first detection side and the second detection side being perpendicular to each other.

In one embodiment, the detecting frame comprises a third detection side. The third detection side faces, in use, a third side of the tubular component. In one embodiment, the detecting unit comprises a third sensor, configured for detecting a third distance signal, representative of a distance along a third detecting direction of the third sensor from the tubular component.

In one embodiment, the third detecting direction is parallel to the second detecting direction.

In one embodiment, the second detection side is parallel to the third detection side.

In one embodiment, the third sensor is positioned on the third detection side. The presence of the third sensor allows to determine the correct position even of tubular components which are not necessarily symmetrical (at least with respect to the direction perpendicular to the first and to the third detecting direction).

According to an embodiment, the detecting frame includes a shell. The shell defines an internal volume. The detecting frame includes a detection hole, which puts the internal volume of the shell in communication with the external environment. Preferably, said at least one sensor is arranged inside the shell. Furthermore, said at least one sensor faces the detection hole, so as to be able to detect the distance along the detecting direction.

In one embodiment, the shell comprises a plurality of detection holes, each one for each sensor which is allocated thereto. In particular, each of said first, second and third sensors faces the respective detection hole, in order to be able to detect the distance along the first, second and third detecting direction, respectively.

The shell comprises a first door (i.e., a housing base, i.e., a containment element), on which the detection hole is obtained. The shell comprises a second door. The first and the second door are movable towards and away from each other along a switching direction. The shell is switchable between a detecting configuration, in which the first and the second door are spaced apart from each other by a first distance along the switching direction, and a working configuration, in which the first and the second door are spaced apart from each other by a second distance along the switching direction.

In one embodiment, the first distance is greater than the second distance.

In one embodiment, in the detecting configuration, the detection hole is misaligned with the second door along the detecting direction. This allows to detect the distance from the tubular component, as the detection hole is free and the sensor reaches the tubular component.

In one embodiment, in the working configuration, the detection hole is aligned with the second door along the detecting direction. That is, the sensor faces the second door, which protects it from external dirt, to prevent any processing residues from damaging said at least one sensor.

Said features clearly also extend to the detection holes associated with the second and third sensors.

According to an aspect of the present description, the present invention also provides a centring unit. The centring unit is arranged, along the axis of rotation, between the working unit and the clamping unit. The centring unit is configured for keeping the component centred with respect to the axis of rotation.

The centring unit comprises a rotating unit, configured for rotating about the axis of rotation. The centring unit comprises a rotation actuator, configured for setting the rotating unit of the centring unit in rotation.

The rotating unit comprises one or more of the following features:
- a circular crown, defining a central opening within which the tubular component can be positioned;
- a plurality of abutment doors, angularly spaced (preferably homogeneously) about the axis of rotation; each of said abutment doors being configured for abutting a respective wall of the tubular component, which is therefore inserted between the abutment doors;
- for each abutment door, a respective recall element, configured for applying a recall force on the abutment door oriented towards the axis of rotation.

The abutment doors are movable along the radial direction towards and away from each other to vary the passage section defined by the circular crown and adapt to the dimensions of the tubular component.

In this regard, each of said doors comprises:
- a respective plate;
- an abutment element.

The abutment element comprises a respective lead-in blade and/or a respective abutment roller.

The plate and the abutment element are arranged at two opposite ends of the abutment door. Therefore, the blade and the roller are arranged on the same end of the abutment door. The recall element is connected to the respective abutment door and to the circular crown.

In one embodiment, for each abutment door, the centring unit comprises a respective engagement actuator. In particular, therefore, there are a plurality of engagement actuators, angularly spaced around the axis of rotation.

Each of said engagement actuators comprises an engagement element, configured for engaging (coupling, connecting) with a plate of a respective abutment door, so as to be able to move the respective abutment door along the radial direction.

In particular, the engagement element of each engagement actuator is movable between a coupling position, in which it has a first radial distance from the axis of rotation, and an opening position, in which it has a second distance from the axis of rotation, greater than the first distance.

The centring unit is therefore movable between the following configurations:
- an engagement configuration, in which the engagement elements are in the coupling position and the rotating unit is rotated until the plates engage in the respective engagement elements;
- an insertion configuration, in which the engagement elements are in the opening position and entrain the respective abutment door, increasing the opening and allowing the tubular component to be inserted;
- an abutment configuration, in which the engagement actuators are left idle, allowing each recall element to be able to bring the respective abutment door back into abutment on the tubular component;
- a cutting configuration, in which each plate is released from each engagement element and all the engagement elements are brought into the opening position.

According to an aspect of the present description, the present invention provides a (laser) cutting machine comprising the clamping unit according to any one of the features described in the present invention and the working unit according to any one of the features described in the present invention. Furthermore, the cutting machine also comprises a control unit, configured for controlling the working unit and one or more actuators of the clamping unit.

The (laser) cutting machine comprises the centring unit according to any one of the features described in the present invention.

According to an aspect of the present description, the present invention provides a method for holding a tubular component while it is being cut with a (laser) cutting machine.

The method comprises a step of rotating a clamping chuck about an axis of rotation, to set the tubular component in rotation by means of a rotary actuator.

The method comprises a step of providing a plurality of clamping tools, each including a first end, connected to the clamping chuck, and a second, free end, opposite the first end along an axial direction parallel to the axis of rotation.

The method comprises a step of moving the tools of said plurality towards and away from each other along a radial direction perpendicular to the axis of rotation between a respective rest position, in which the tool is radially spaced from the axis of rotation by a first distance, and a working position, in which the tool engages the tubular component and is spaced from the axis of rotation by a second distance, smaller than the first.

The method comprises a step of clamping the tubular component by applying a clamping force on the tubular component.

Advantageously, the clamping force includes at least one component along the axial direction, having a clamping sense, towards the inside of the chuck.

According to an aspect of the present description, the present invention provides a method for centring a tubular component in a cutting machine. The method comprises a step of providing a rotating crown on which a plurality of abutment doors are mounted, each including an abutment element (which can include a lead-in blade and an abutment roller), arranged at a first end of the door, and a plate, arranged at the end opposite that with the abutment element.

The method comprises a step of arranging a plurality of engagement actuators, each including a respective engagement element.

The method comprises a step of rotating the circular crown with the abutment doors entrained therewith.

The method comprises a step of engaging the plate of each abutment door on a corresponding engagement element of a respective engagement actuator.

The method comprises a step of opening the abutment doors, by means of displacement of the abutment doors along a radial direction perpendicular to the axis of rotation and in a sense oriented exiting from the axis of rotation.

The method comprises a step of recalling the doors, by means of displacement of the abutment doors along a radial direction perpendicular to the axis and in a sense oriented entering the axis of rotation, so as to bring the abutment element into abutment on the tubular component.

The method provides a step of retracting the engagement elements along the radial direction away from the axis of rotation, to allow a free rotation of a rotating unit including the abutment doors and the circular crown.

According to an aspect of the present description, the present invention provides a method for cutting a tubular component with a laser cutting machine.

The method comprises a step of arranging a working unit comprising a laser emitter and a detecting unit, including at least one sensor.

The method comprises a step of moving the laser emitter along a radial direction, perpendicular to the axial direction, towards and away from the tubular component.

The method comprises a step of emitting a cutting wave towards the tubular component by means of the laser emitter.

The method comprises a step of detecting a detection signal, representative of a distance along a detecting direction of said at least one sensor from the tubular component and/or a position of the tubular component with respect to the cutting device.

The method provides that, preferably, in the movement step of the laser emitter, said detecting unit moves integrally with the laser emitter along the axial direction, to perform a detection at the axial coordinate in which the cutting device operates.

Advantageously, the detecting step of the detection signal is performed before the laser wave emission step.

The cutting method also comprises a step of clamping, according to one or more of the steps included in the method for clamping a tubular component during a cut and a centring step, according to one or more of the steps included in the method for centring a tubular component during a cut.

These and other features will become more apparent from the following description of a preferred embodiment, illustrated purely by way of nonlimiting example in the accompanying drawings, wherein:

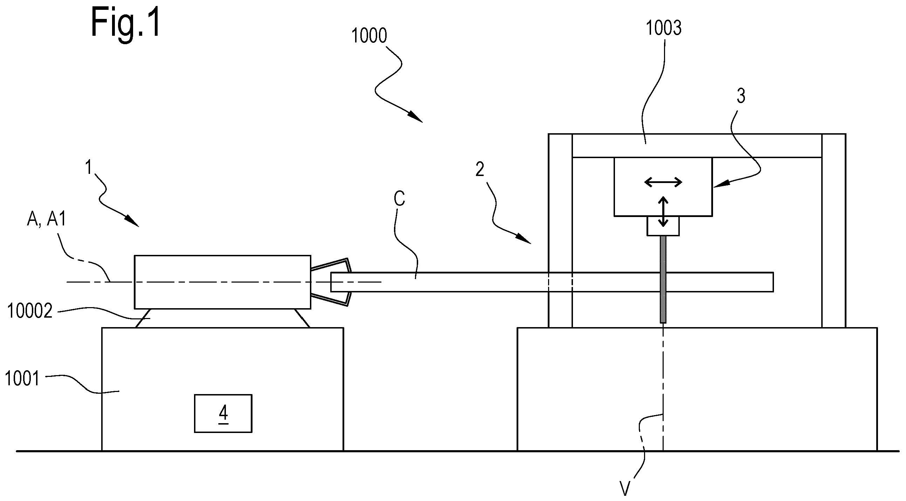

- figure 1 schematically illustrates a machine for cutting a tubular component according to the present invention;

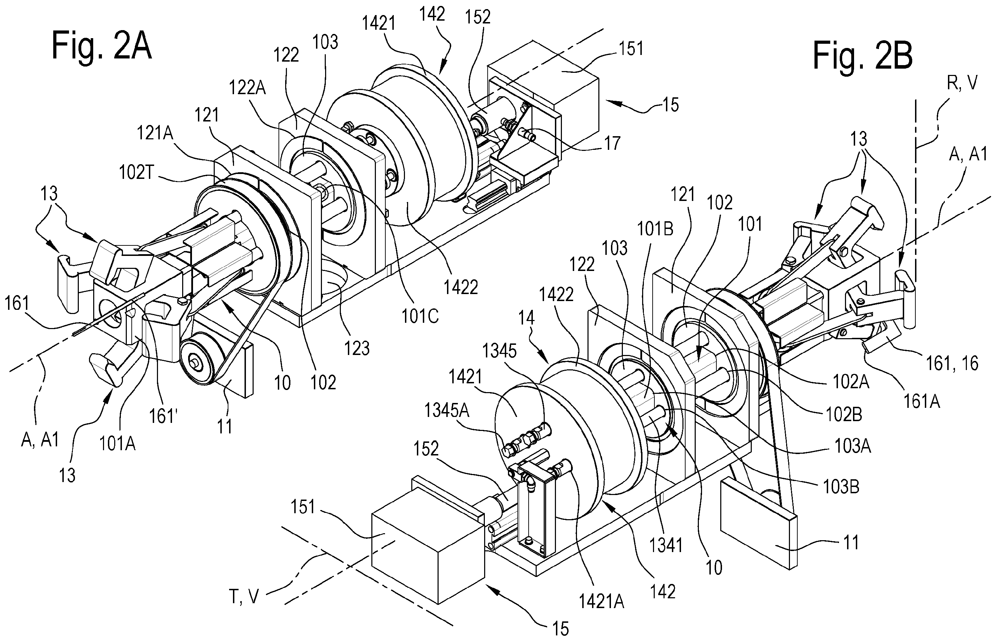

- figures 2A and 2B illustrate a first and a second perspective view of a clamping unit of the machine of figure 1;

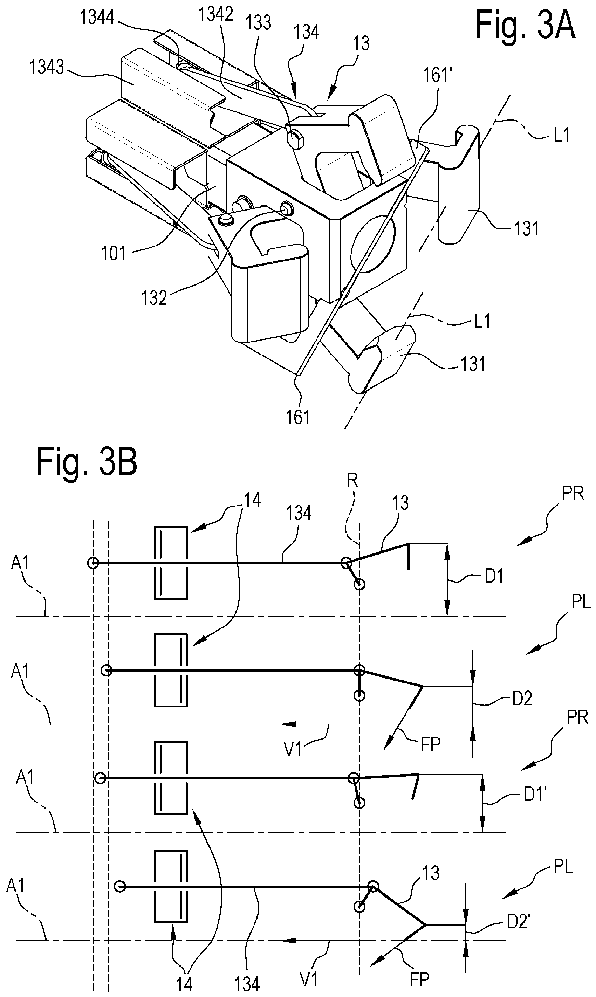

- figures 3A and 3B illustrate a detail of a plurality of clamping tools of the clamping unit of figure 2A and a schematic view of a plurality of positions of an example of kinematics of said plurality of tools, respectively;

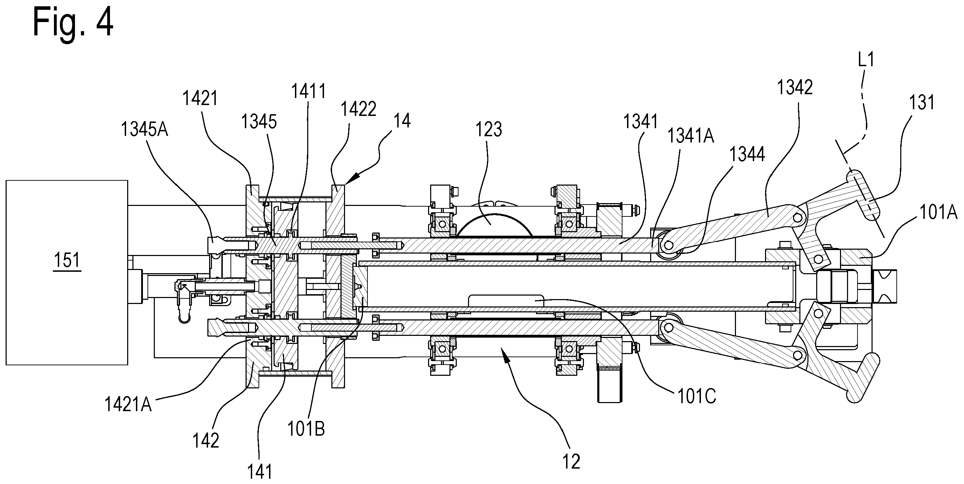

- figure 4 illustrates a lateral section of the clamping unit of figure 2A;

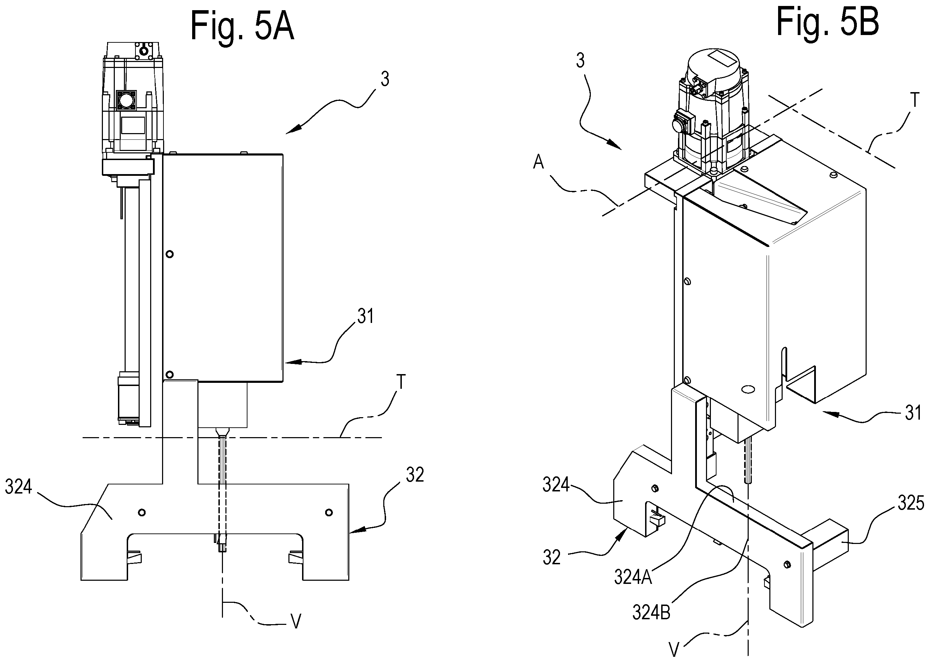

- figures 5A and 5B illustrate a lateral view and a perspective view of a working unit of the machine of figure 1, respectively;

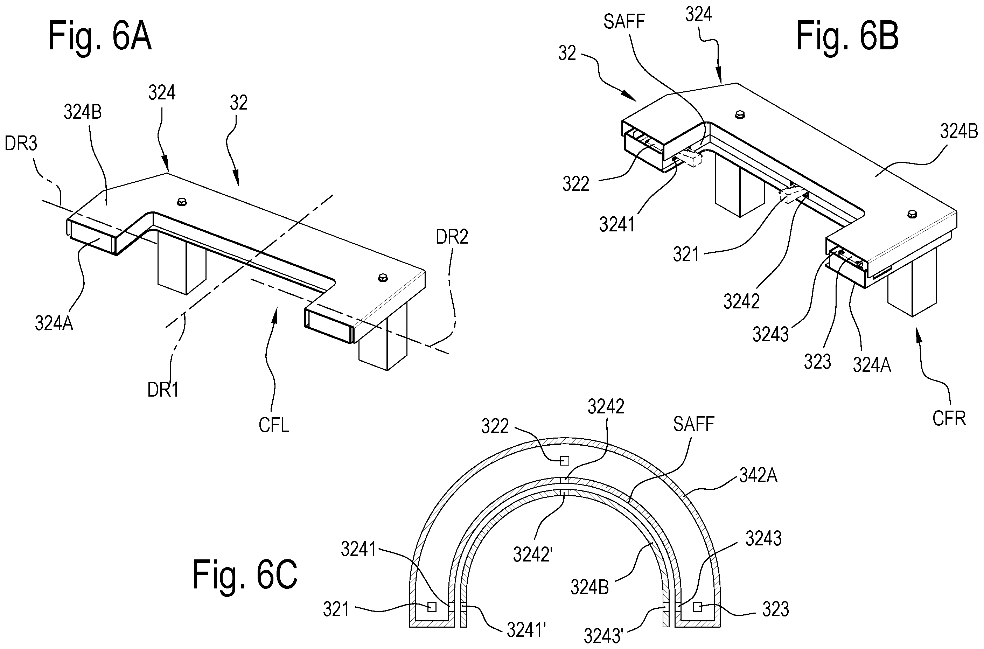

- figures 6A and 6B illustrate a perspective view of a first configuration and of a second configuration of a detecting unit of the working unit of figure 5A, respectively;
- figure 6C illustrates a further embodiment of the working unit of figure 6A;

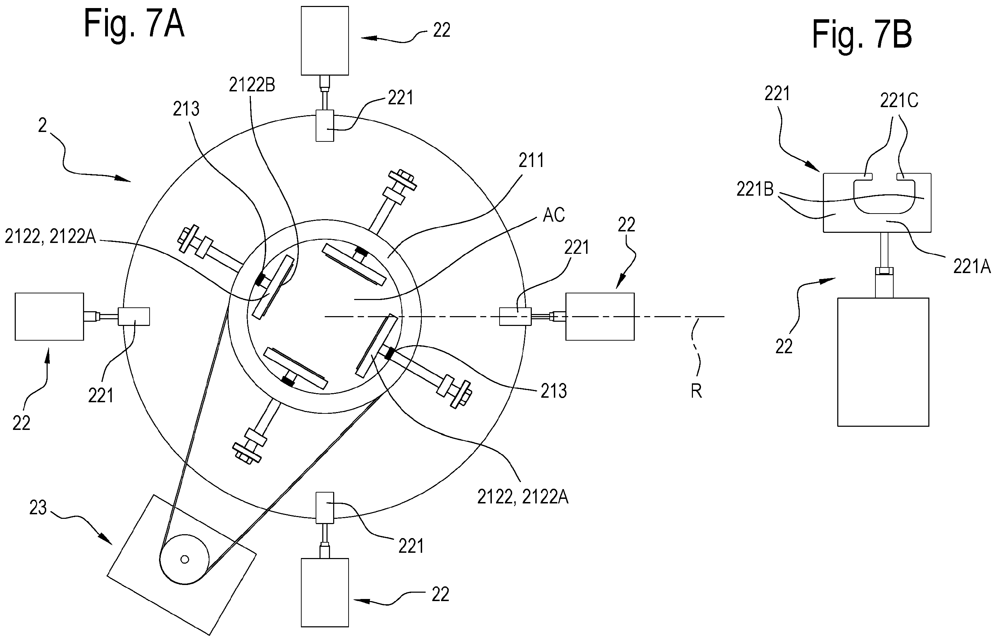

- figure 7A illustrates a front view of a centring unit of the machine of figure 1;
- figure 7B illustrates a detail of an engagement actuator of the centring unit of figure 6A.

With reference to the appended drawings, the reference 1000 indicates a machine for cutting a tubular component C, preferably using a laser cut.

The machine 1000 comprises a clamping unit 1, configured for gripping the component C during the machining. The machine 1000 comprises a centring unit 2, configured for keeping the component C centred during the machining. The machine 1000 comprises a working unit 3, configured for performing the cut on the component C.

The machine 1000 comprises a base 1001, resting on the ground to support the machine 1000. The machine 1000 comprises a clamping guide 1002, positioned above the base 1001 and configured for slidingly guiding the clamping unit 1 along an axial direction A.

The machine 1000 comprises a work guide 1003, configured for slidingly guiding the working unit 3 along an axial direction A.

The machine 1000 comprises a control unit 4, configured for receiving and sending command signals, for commanding the components of the cutting machine during cutting machining.

During the machining, the component C can be set in rotation about an axis of rotation A1, parallel to the axial direction A.

An exemplary embodiment of the clamping unit 1 will be described below, without thereby limiting the scope of protection to said example.

The clamping unit 1 comprises a clamping chuck 10. The clamping chuck 10 is rotating about the axis of rotation A1. The suction chuck 10 comprises a shaft 101, which extends between a first end 101A and a second end 101B. The first end 101A of the shaft 101 directly faces, in use, the component C. Preferably, the shaft 101 is a hollow shaft, having an internal volume. In one embodiment, the shaft 101 has a rectangular section. This allows to also transmit a torque which it receives to other components keyed thereon. In one embodiment, the shaft 101 comprises a discharge hole 101C, which is open on a suction manifold 12 of the clamping unit 1, to receive waste and machining chips resulting from the cutting.

More in detail, the suction manifold 12 comprises a first wall 121 and a second wall 122, parallel to each other and perpendicular to the axial direction A. The suction manifold comprises side walls (not illustrated in the figure to show the internal components), which define a suction volume. The side walls comprise a suction opening 123, on which a hose connected to a vacuum machine is for example mounted. Each of said first and second walls 121, 122 comprises a respective support hole 121A, 122A.

The clamping chuck 10 comprises a first disc 102, which is configured for being housed in the support hole 121A of the first wall 121 of the suction manifold 12. The clamping chuck 10 comprises a second disc 103, which is configured for being housed in the support hole 122A of the second wall 122 of the suction manifold 12.

We can note that said first disc 102 and said second disc 103 are coupled with the respective support holes 121A, 122A so as to be able to freely rotate with respect to the latter, for example, by means of rolling bearings. This allows the chuck 10 to freely rotate with respect to the suction manifold. Each of said first disc 102 and second disc 103 comprise:
- a respective central hole 102A, 103A, which is crossed by the shaft 101 and which therefore has a section which is complementary to that of the shaft to define a shape coupling;
- a respective plurality of circumferential holes 102B, 103B (for example four circumferential holes), angularly spaced about the central hole. Each hole of said plurality of circumferential holes 102B (of the first disc 102) is aligned along the axial direction A with a corresponding hole of the plurality of circumferential holes 103B (of the second disc 103).

Furthermore, the first disc 102 comprises a transmission portion 102T, misaligned with the support hole 121A along the axial direction A and configured for receiving a driving power and transmitting it to the shaft 101. The transmission portion 102T could also be defined by a separate disc (to define a third disc 102T). According to an example embodiment, the transmission portion 102T has a cylindrical transmission surface, on which a belt driven by an actuator is engaged.

In this regard, we can note that the clamping unit 1 comprises a rotary actuator 11, configured for setting the chuck 10 in rotation. For example, the rotary actuator 11 comprises a transmission belt, which engages with the transmission portion 102T of the first disc 102, so as to rotate the entire chuck 10.

The clamping unit 1 comprises a plurality of clamping tools 13, each including a first end 13A, connected to the clamping chuck 10, and a second end 13B, free and opposite the first end 13A along the axial direction A.

The tools 13 of said plurality being movable towards and away from each other along a radial direction R, perpendicular to the axis of rotation A1.

Each tool 13 is movable between a respective rest position PR, in which the tool 13 is radially spaced from the axis of rotation A1 by a first distance D1, D1', and a working position PL, in which the tool 13 engages the tubular component C and is spaced from the axis of rotation A1 by a second distance D2, D2', smaller than the first distance D1, D1'.

Each tool 13 is configured for applying a clamping force FP on the tubular component including at least one component along the axial direction A, having a clamping sense V1, towards the inside of the chuck 10.

The clamping unit 1 comprises a clamping actuator 14, configured for moving said plurality of tools 13 along the radial direction. In the specific example illustrated, said clamping actuator is a linear actuator 14. The linear actuator 14 rotates integrally with the clamping chuck 10. The linear actuator comprises a piston 141 and a cylinder 142. In particular, the shaft 101 is connected to the cylinder 142 of the linear actuator, in particular the second end 101B of the shaft 101 is connected to the cylinder 142. The cylinder 142 comprises a first bottom wall 1421 and a second bottom wall 1422. The second end 101B of the shaft 101 is connected to the second bottom wall 1422 of the cylinder 142.

Each of said first bottom wall 1421 and second bottom wall 1422 includes a corresponding plurality of circumferential holes 1421A, 1422A. Each hole of said plurality of circumferential holes 1421A (of the first bottom wall 1421) is aligned along the axial direction A with a corresponding hole of the plurality of circumferential holes 1422A (of the second bottom wall 1422).

Furthermore, each circumferential hole of the first bottom wall 1421 is aligned with a corresponding circumferential hole of the second bottom wall 1422, of the first disc 102 and of the second disc 103 to define a passage which, starting from the cylinder, reaches the first end 101A of the shaft 101. The number of circumferential holes obtained on the first disc 102, on the second disc 103, on the first bottom wall 1421 and on the second bottom wall 1422 defines the number of clamping tools 13 which can be implemented on the clamping unit 13 in that, for each hole, it is possible to move and control a corresponding clamping tool 13.

The piston 141 of the linear actuator 14 is movable along the axial direction A between a first limit position (also defined start position in the text), which corresponds to the rest position PR of the clamping tools 13, and a second limit position (also defined abutment position in the text), which corresponds to the working position PL of the clamping tools 13. It cannot be clearly excluded that, if the deformation resistance of the component C exceeds the force of the clamping actuator 14, the second limit position of the piston 141 is not reached even if, in all respects, the tools 13 are in the working position PL because they efficiently grip the component.

The piston 141 comprises a respective plurality of circumferential holes 1411, in a number equal to those obtained on the first bottom wall 1421 and/or on the second bottom wall 1422 of the cylinder 142.

In particular, each clamping tool 13 is connected to the piston 141 at a respective circumferential hole of said plurality 1411.

According to an aspect of the present description, each clamping tool 13 is connected to the piston 141 through an adjustable connection, which allows an adjustment of the position of the tool 13 with respect to the piston 141 along the axial direction A. Specifically, according to an exemplary embodiment, each clamping tool 13 is connected to the piston 141 by means of a coupling which allows the rotation of the tool 13 with respect to the piston but instead constrains the tool 13 to move along the axial direction A in a manner constrained to the piston 141.

In the following, a clamping tool 13 will be described, thereby intending to extend such features also to the other clamping tools 13 of said plurality 13. The clamping tool 13 comprises a contact element 131, configured for contacting the tubular component. The contact element 131 has a main extension axis L1 which, in the clamping position PR of the respective clamping tool 13, is convergent towards the axis of rotation A1 in the clamping sense V1. According to an embodiment, the contact element 131 is defined by a U-shaped body. In such a case, the longitudinal axis L1 is the extension axis of the U-shaped body part which comes into contact with the component C.

The clamping tool comprises a first hinge 132. The contact element 131 of the clamping tool 13 is connected to the shaft 101 by means of the first hinge 132.

The clamping tool comprises a second hinge 133.

The clamping tool comprises a transmission unit 134, configured for transferring a displacement of the piston 141 to the contact element 131 of the clamping tool. The transmission unit 134 is connected to the contact element 131 by means of the second hinge 133. In particular, the thrust received by the transmission unit 134 acts on the second hinge 133, generating a force which determines a rotation of the contact element 131 with respect to the first hinge 132 about a respective tangential axis, perpendicular to the axis of rotation A1 and to the radial direction R. Such a rotation of the contact element 131 allows to radially approach the contact element 131 itself to the axis of rotation A1 with a circular trajectory, which, after passing a certain rotation angle, causes a clamping force FP having the axial component directed in the clamping sense V1.

The transmission unit 134 comprises a drive rod 1341, movable along the axial direction A (at least) due to the effect of a displacement of the piston 141. The displacement of each drive rod 1341 causes a corresponding rotation of the respective contact element 131 about the corresponding first hinge 132.

In particular, the transmission unit 134 comprises, for each drive rod, a respective connecting rod 1342, interposed between the second hinge 133 and the drive rod 1341, to transform the translation of the drive rod 1341 into a tangential thrust which causes the rotation of the contact element 131. The transmission unit 134 comprises, for each drive rod 1341, a respective slideway 1343 and a respective revolving element 1344, sliding inside the slideway 1343. The revolving element 1344 is connected to a first end 1341A of the drive rod 1341, to allow an easier translation of the drive rod 1341 within the slideway 1343.

The slideway 1343 is obtained on the outer surface of the shaft 101. The drive rod 1341 is inserted inside a respective circumferential hole of the first disc 102 and inside a respective circumferential hole of the second disc 103. The transmission unit 134 comprises an adjustment pin 1345. The adjustment pin 1345 is coaxial with the respective drive rod 1341. More in general, at least one part of the adjustment pin (possibly not coaxial to the other parts of the adjustment pin 1345) is coaxial to at least one part of the drive rod 1341 (possibly not coaxial to the other parts of the adjustment pin 1341). Preferably, the adjustment pin 1345 is inserted inside a respective circumferential hole of the first bottom wall 1421, inside a respective circumferential hole of the second bottom wall 1422 and inside a respective circumferential hole of the piston 141, inside which it is free to rotate about the axis thereof.

For example, in an embodiment, the adjustment pin 1345 could be outside the linear actuator 14 and misaligned from the latter along an axial direction. In such an embodiment, the drive rod comprises a first portion and a second portion, hinged to each other. To move the drive rod thus made, the adjustment pin comprises a first portion and a second portion, hinged to each other by means of a universal joint. The first portion is directed along the axial direction while the second portion is coaxial to the second portion of the drive rod to transfer the motion received from the adjustment actuator. The adjustment pin 1345 and the respective drive rod 1341 are connected to each other by means of a screw-nut screw connection, so that a rotation of the adjustment pin 1345 about the axis thereof causes a translation of the drive rod 1341 along the axial direction A and, therefore, a rotation of the contact element 131.

Clearly, it is possible to provide the screw on the adjustment pin 1345 and the threaded seat on the drive rod 1341 or vice versa.

This feature allows to adjust the mutual position (between piston 141 and drive rod 1341) along the axial direction A by means of mutual rotation between adjustment pin 1345 and respective drive rod 1341, while keeping the possibility of driving the tool 13 with a thrust of the piston 141 directed along the axial direction A. This type of connection allows to change the rest position PR of each clamping tool 13, so that, following the displacement carried out by the linear actuator 14, the working position PL is closer to the axis of rotation A1 and, therefore, more suitable for components C of smaller diameters. Obviously, the reverse is true to obtain clamping on components with larger diameters.

That is, in the absence of such an adjustment, the first distance D1 and the second distance D2 would always be the same. Instead, by varying the rest position PR of the clamping elements, a first adjusted distance D1' and a second adjusted distance D2' adaptable to the component C are defined. We have observed that the difference between the first distance D1 and the second distance D2 can be equal to or different from the difference between the first adjusted distance D1' and the second adjusted distance D2'.

The adjustment pin 1345 (the clamping tool 13 more generally) comprises, at an end thereof, a coupling element 1345A, configured for coupling with a corresponding actuator, to receive a rotation.

The clamping unit 1 comprises an adjustment unit 15. The adjustment unit comprises an adjustment actuator 151, for example a rotary electric motor. The adjustment unit 15 comprises an adjustment key 152, configured for coupling with a coupling element 1345A of a clamping tool 13. For example, but not limitedly, the coupling element 1345A of a clamping tool 13 is a bolt having a profile thereof and the adjustment key 152 is configured for receiving the bolt therein, so that a rotation thereof involves a rotation of the adjustment pin 1345 (and, more generally, a radial displacement of the contact element 131 of the clamping tool 13). Preferably, the coupling element 1345A is a conical female element, i.e., with a decreasing diameter in the entering direction. This allows to have a greater ease of insertion of an adjustment key 152 and a greater grip, free of clearance, as the axial insertion of the adjustment key increases.

We can note that, according to an embodiment, the adjustment key 152 can be a female element, i.e., hollow, preferably with cavity whose diameter grows in the insertion direction, while the coupling element 1345A is a key (i.e., a bolt, i.e., a male profile without cavity) also preferably provided with a conical outer surface, so as to define a diameter of the coupling element 1345A increasing in the insertion direction.

The adjustment key 152 is movable between a clamping position, in which it engages the coupling element 1345A, and a rest position, in which it is distanced from the coupling element 1345A which, therefore, can rotate integrally with the clamping chuck 10.

According to an embodiment, the adjustment unit 15 is configured for selectively adjusting the axial position of each clamping tool 13 (i.e., of the corresponding drive rod 1341).

To achieve such a technical effect, at least three approaches can be used. According to a first approach, the adjustment unit 15 comprises a selection actuator, configured for displacing the adjustment key 152 on a plane perpendicular to the axial direction A, so as to bring the adjustment key 152 into axial alignment with the coupling element 1345A of each clamping tool 13.

According to a second approach, the adjustment key 152 is fixed with respect to the clamping chuck 10, which rotates to bring each coupling element 1345A into axial alignment with the adjustment key 152, one at a time.

Finally, according to a third embodiment, the adjustment unit 15 comprises a plurality of adjustment keys 152, each dedicated to a respective coupling element 1345A. In this embodiment, an electric motor could be provided for each adjustment key 152 or a selective engagement of each adjustment key 152 with a single electric motor.

These features allow to have working positions PL of the clamping tools 13 with the relative second distances D2, D2' which are different from each other and which, therefore, create contact points with the component C which are not equidistant from the axis of rotation and, therefore, also suitable for non-axially symmetric bodies.

The clamping unit 1 comprises a component detecting unit 16.

The component detecting unit 16 comprises an activating element 161. For example, the activating element is a detection plate 161, which is hinged to the first end 101A of the shaft 101, so that when the component C abuts on the first end 101A of the shaft 101 the latter exerts a force on the detection plate 161, which rotates about the hinge connecting it to the shaft 101.

The detection plate 161 comprises a contact end 161A, which changes an axial coordinate thereof as a result of a rotation of the detection plate 161. The component detecting unit 16 comprises a contact sensor, configured for detecting a displacement of the contact end 161A which highlights the component C having reached the abutment on the shaft 101.

Said contact sensor is configured for generating a presence signal, representative of the presence of the tubular component in the clamping zone, i.e., in response to the detection of the displacement of the contact end 161A. The contact sensor (not illustrated in the drawings) is positioned on the clamping chuck 10, in a position interposed between a clamping tool 13 and the clamping tool following it along the circumferential direction.

Said contact sensor is configured for sending the presence signal to the control unit 4 of the cutting machine 1000.

Preferably, the clamping actuator 14 is configured for receiving an enabling signal from said control unit 4, to enable or inhibit the actuation thereof based on the presence signal.

In one embodiment, the component detecting unit 16 comprises at least one further activating element 161' (i.e., a further detection plate 161') with a relative sensor, angularly spaced from the activating element by an angle equal to 180 degrees. This allows to be sure that in any position in which the piece is gripped, at least one activating element is touched and rotated accordingly.

The clamping unit 1 comprises a calibrating unit 17, configured for detecting when each clamping tool 13 reaches a reference position. In particular, and specifically in the illustrated example, the calibrating unit 17 is configured for detecting when the coupling element 1345A reaches an axial reference position.

The calibrating unit 17 is configured for sending a reset signal to the control unit 4, to associate the respective clamping tool 13 with a coordinate corresponding to the reference position, i.e., the zero coordinate which, after several operations, could be conditioned by several errors.

The centring unit 2 is arranged, along the axis of rotation A1, between the working unit 3 and the clamping unit 1.

The centring unit 2 comprises a rotating unit 21, configured for rotating about the axis of rotation A1. The centring unit 2 comprises a rotation actuator 23, configured for setting the rotating unit 21 of the centring unit 2 in rotation.

In particular, the rotating unit 21 comprises a circular crown 211, defining a central opening AC. In use, the tubular component C passes through the central opening.

The rotating unit 21 comprises a plurality of abutment doors 212. The abutment doors 212 are angularly spaced (preferably homogeneously) about the axis of rotation A1. Each of said abutment doors 212 is configured for abutting a respective wall of the tubular component C, which is therefore inserted between the abutment doors 212. The abutment doors 212 are movable along the radial direction R between an abutment position, in which they are in contact with the component C, and a retracted position, in which they are retracted to allow an insertion of the tubular component C.

In this regard, each of said doors 212 comprises a respective plate 2121. Each of said doors 212 comprises a respective abutment element 2122. The plate 2121 and the abutment element 2122 are arranged at two opposite ends of the abutment door 212 along the radial direction.

In one embodiment, each abutment element 2122 comprises a respective lead-in blade 2122A, configured for constituting a lead-in for the component passing through the central opening AC, and a respective abutment roller 2122B, configured for abutting the component during machining and to allow an axial sliding thereof with respect to the centring unit 2.

For each abutment door 212, the rotating assembly 21 comprises a respective recall element 213, configured for applying a recall force on the abutment door 212 oriented towards the axis of rotation A1. Preferably, the recall element is a Belleville washer. The recall element 213 is connected to the respective abutment door 212 (to the abutment element 2122 and to the plate 2121 which are mutually constrained to move along the radial direction R). The recall element 213 is connected to the circular crown 211. The recall element 213 is configured for returning the respective abutment door 212 from the retracted position to the abutment position.

For each abutment door 212, the centring unit 2 comprises a respective engagement actuator 22. In particular, therefore, there are a plurality of engagement actuators 22, which are preferably angularly spaced about the axis of rotation A1, so as to be aligned with the respective abutment door 212 which they are intended to actuate. In particular, according to a preferred embodiment, the angular spacing between one abutment door 212 and the next is equal to the angular spacing between one engagement actuator 22 and the next, so that the engagement actuators 22 are capable of actuating all the abutment doors 212 simultaneously.

Each of said engagement actuators 22 comprises an engagement element 221. The engagement element 221 is configured for engaging (coupling, connecting) with a plate 2121 of a respective abutment door 212, so as to be able to move it along the radial direction R.

In a preferred embodiment, the engagement element comprises a base wall, 221A connected to a stem of a piston of the corresponding engagement actuator, two side walls 221B, which extend along the radial direction R starting from the base wall 221A, and two abutment walls 221C, which are perpendicular to the radial direction R and are spaced apart from each other by a passageway, having a value such as to allow the passage of a stem of the plate 2121. Therefore, in such a conformation, the engagement element 221 defines a "C"-shaped body.

Therefore, the engagement element 221 of each engagement actuator 22 is movable between a coupling position, in which it has a first radial distance from the axis of rotation A1, and an opening position, in which it has a second distance from the axis of rotation A1, greater than the first distance. More in detail, in the coupling position, the engagement element 221 is interfering with a circular trajectory defined by the rotation of the plates 2121 about the axis of rotation A1 (with abutment doors 212 in abutment position). Precisely by virtue of such interference, the plate 2121 of each abutment door 212 is inserted in the corresponding engagement element 221. Such an insertion is carried out trivially by phasing, or radially aligning, the engagement actuator 22 (in the coupling position thereof) and the corresponding plate 2121 (in the abutment position of the abutment door 212). Instead, in the opening position, the engagement element 221 is spaced by a circular trajectory defined by the rotation of the plates 2121 about the axis of rotation A1 (with abutment doors 212 in abutment position). Thereby, during the operations, the rotation of the rotating unit 21 does not touch the engagement actuators 22.

Once all the plates 2121 have been inserted into the respective engagement elements 221, each coupling element is brought into the opening position. This allows the section of the central opening to be increased, to allow the insertion of the component C. Once the insertion of the component C into the central opening AC has been performed, each engagement actuator 22 is released, allowing each recall element 213 to return the abutment door 212 to the abutment position thereof (abutting the component C). Clearly, the abutment position can radially vary based on the diameter of the component C. Once the abutment elements 2122 have abutted on the component C, the rotating unit 21 is rotated, radially misaligning the plates 2121 from the respective engagement elements 221 and thus determining their disengagement.

Lastly, the engagement elements 221 are returned to the opening position to prevent them from interfering with the doors 212 which rotate during operations on the component C.

The working unit 3 is configured for performing laser cutting on the component C. To do this, it is movable along the axial direction A, to move along the axial coordinate of the component C.

The working unit comprises a cutting device, configured for performing laser cutting exactly on the component. The cutting device comprises a laser head 31, configured for emitting an electromagnetic wave with a variable power and settable by means of the control unit 4.

Furthermore, the cutting device (at least the laser head 31) is movable along a vertical direction V, perpendicular to the axial direction A, towards and away from the component C, so as to be able to be positioned at a focus distance which allows it to make the cut accurately and precisely.

Furthermore, the cutting device (at least the laser head 31) is movable along a transverse direction T, perpendicular to the axial direction A and to the vertical direction V, to be able to possibly make complex cutting profiles on the tubes as well as to make transverse cuts separating the component C into two separate pieces.

It is possible to provide an embodiment in which the laser head 31 (the cutting device) is locally movable along the axial direction A with respect to the working unit 3 as a whole, to perform adjustments of the axial position without requiring the displacement of the entire working unit 3.

The working unit 3 comprises a detecting unit 32.

In the illustrated exemplary embodiment, the working unit 3 comprises a first sensor 321, configured for detecting a first detection signal representative of a distance along a first detecting direction DR1 of said first sensor 321 from the tubular component C. The working unit 3 comprises a second sensor 322, configured for detecting a second detection signal representative of a distance along a second detecting direction DR2 of said second sensor 322 from the tubular component C. The working unit 3 comprises a third sensor 323, configured for detecting a third detection signal representative of a distance along a third detecting direction DR3 of said third sensor 323 from the tubular component C.

We have however seen how a solution is possible with a single sensor (e.g., a camera) which is capable of detecting a detection signal which is already representative of a position of the tubular component C with respect to the cutting device 31.

The first sensor 321, the second sensor 322 and/or the third sensor 323 are distance sensors, for example photocells, optical sensors and/or laser sensors.

Advantageously, said detecting unit 32 is integrally movable with the cutting device (with the laser head 31) along the axial direction A, to perform a detection at the axial coordinate in which the laser head 31 operates.

In particular, according to a particularly advantageous aspect, the detecting unit 32 is configured for detecting the detection signals before the machining is performed and not simultaneously.

The detecting unit 32 comprises a shell 324, configured for housing the first, second and third sensors 321, 322, 323. The shell 324 comprises a housing base 324A (first door), in which the first, second and third sensors 321, 322, 323 are arranged. The shell 324 comprises a covering element 324B (second door), arranged, along the axial direction A, superimposed on the housing base 324A, so as to cover the sensors which are arranged therein. The housing base 324A comprises a first detection hole 3241, aligned along the first detecting direction DR1 with the first sensor 321. The housing base 324A comprises a second detection hole 3242, aligned along the second detecting direction DR2 with the second sensor 322. The housing base 324A comprises a third detection hole 3243, aligned along the third detecting direction DR3 with the third sensor 323.

Preferably, the first detecting direction DR1 is parallel to the vertical direction V, in order to be able to detect a vertical distance of the component C from the laser head 31. Preferably, the second detecting direction DR2 and the third detecting direction DR3 are coincident and parallel to the transverse direction T, so as to be able to detect a distance on the two transverse sides of the component C from the second and from the third sensor 322, 323, thus being able to perfectly locate the component C with respect to the axis of rotation A1.

Therefore, the control unit 4 is configured for receiving the first, the second and/or the third detection signal from the detecting unit 32. The control unit 4 is configured for generating a command signal as a function of the first, second and/or third detection signal and for sending the command signal to the laser head 31 to command the movement thereof with respect to the component C. In fact, the control unit 4, knowing the transverse distances of the component C from the second and from the third sensor 322, 323 is capable of deriving a transverse position of the component C.

In one embodiment, the shell 324 is movable between a detecting configuration CFR, in which the housing base 324A and the covering element 324B are spaced from each other by a first distance along a switching direction, preferably parallel to the axial direction A, and a working configuration CL, in which the housing base 324A and the covering element 324B are spaced from each other by a second distance along the switching direction.

The first distance is greater than the second distance. In the detecting configuration CFR, the first, the second, and/or the third detection hole 3241, 3242 are misaligned with the covering element 324B along the first detecting direction DR1, the second detecting direction DR2, and the third detecting direction DR3, respectively. Thereby, each of said first, second and third sensors 321, 322, 323 are capable of detecting the distance from the component C. In the working configuration CFL, the first, the second and/or the third detection hole 3241, 3242 are aligned with the covering element 324B along the first detecting direction DR1, the second detecting direction DR2 and the third detecting direction DR3, respectively, to prevent any machining residues from damaging the first, the second or the third sensor 321, 322, 323.

The housing base 324A, in an embodiment, is made with a semi-circle shape, including a facing surface SAFF, facing the component and on which the first, the second and/or the third detection hole 3241, 3242, 3243 are obtained. In such an embodiment, the covering element 324B has the shape of a semi-circle plate, having the same radius of curvature as the housing base 324A. The semi-circle plate comprises a respective first, second and third opening 3241', 3242', 3243'. The semi-circle plate 324B is movable with respect to the housing base 324A by rotation about an axis spaced from the respective radius of curvature, so as to always remain adherent to the facing surface SAFF.

In such an embodiment, in the detecting configuration CFR, the first, the second and/or the third detection hole 3241, 3242, 4243 are radially aligned with the first, the second and the third opening 3241', 3242', 3243' of the semi-circle plate 324B, which allows to have access to the component by alignment of the holes. Instead, in the working configuration CFL, the first, the second and/or the third detection hole 3241, 3242, 4243 are radially misaligned with the first, the second and the third opening 3241', 3242', 3243' of the semi-circle plate 324B, so that dirt cannot penetrate into the internal volume of the housing base 324A. In this embodiment, the switching from the detecting configuration CFR to the working configuration CFL is performed by means of a slight rotation (corresponding to an arc having a greater extension than the circumferential extension of the detection holes and the openings) in a first direction, and vice versa in a second direction opposite the first to switch from the working configuration CFL to the detecting configuration CFR.

The covering element 324B along the first detecting direction DR1, the second detecting direction DR2, and the third detecting direction DR3, respectively. Thereby, each of said first, second and third sensors 321, 322, 323 are capable of detecting the distance from the component C. In the working configuration CFL, the first, the second and/or the third detection hole 3241, 3242 are aligned with the covering element 324B along the first detecting direction DR1, the second detecting direction DR2 and the third detecting direction DR3, respectively, to prevent any machining residues from damaging the first, the second or the third sensor 321, 322, 323.

The detecting unit 32 comprises a switching actuator 325, configured for switching the shell between the detecting configuration CFR and the working configuration CFL.

Therefore, the working unit provides to perform a working method which involves:
- bringing the shell 324 into the detecting configuration CFR;
- performing a detection of the distance of each sensor 321, 322, 323 from the respective side of the component C;
- deriving, based on the detection performed, a vertical position of the laser head and/or a transverse position of the component C;
- generating command signals based on the derived vertical position and the transverse position of the derived component;
- bringing the shell into the working configuration CFL;
- sending the command signals to the laser head 31 to instruct it to perform the cutting (machining) on the component C.

Therefore, the cutting and the detection are preferably performed in two successive moments in time.

## Claims

1. A clamping unit (1) for a laser cutting machine (1000) for cutting a tubular component (C), the clamping unit (1) comprising:
- a clamping chuck (10), configured for rotating about a respective axis of rotation (A1) and for entraining the tubular component (C) in rotation;
- a rotary actuator (11), configured for setting the clamping chuck (10) in rotation;
- a plurality of clamping tools (13), each including a first end, connected to the clamping chuck (10), and a second, free end, opposite the first end along an axial direction (A) parallel to the axis of rotation (A1),
the tools of the plurality (13) being movable towards and away from each other along a radial direction (R) perpendicular to the axis of rotation (A1) between a respective rest position (PR), where the tool (13) is radially spaced from the axis of rotation (A1) by a first distance (D1, D1'), and a working position (PL), where the tool (13) engages the tubular component (C) and is spaced from the axis of rotation (A1) by a second distance (D2, D2'), smaller than the first distance (D1, D1');
- a clamping actuator (14), configured for moving the plurality of tools (13) between the rest position (PR) and the working position (PL),
**characterized in that** each tool (13) is configured for applying a clamping force (FP) on the tubular component (C) including at least one component along the axial direction (A) having a clamping sense (V1) towards the inside of the clamping chuck (10).

2. The clamping unit (1) according to claim 1, wherein each clamping tool (13) comprises a respective contact element (131), configured for contacting the tubular component (C), and wherein the contact element (131) has a main axis of extension (L1) which, at the working position (PL) of the respective clamping tool (13), converges with the axis of rotation (A1) in the clamping sense (V1).

3. The clamping unit (1) according to claim 2, wherein the clamping chuck (10) comprises a body and wherein each clamping tool (13) is hinged to the body of the clamping chuck (10) at a respective first hinge (132), to rotate between the respective rest position (PR) and the respective working position (PL) about a respective tangential axis, perpendicular to the axis of rotation (A1) and to the radial direction (R).

4. The clamping unit (1) according to claim 3, comprising, for each clamping tool (13), a corresponding transmission unit (134), including a drive rod (1341), movable along the axial direction (A) under the action of the clamping actuator (14), and wherein a displacement of each drive rod (1341) causes a corresponding rotation of the respective contact element (131) about the corresponding first hinge (132).

5. The clamping unit according to claim 4, wherein the transmission unit (134) comprises, for each drive rod (1341):
- a respective slideway (1343) configured for guiding an axial displacement of the drive rod (1341);
- a respective connecting rod (1342), connected to the contact element (131) and to the sliding drive rod (1341), to convert the axial displacement of the drive rod (1341) into a rotation of the contact element (131).

6. The clamping unit (1) according to any one of the preceding claims, comprising an adjustment unit (15), including at least one adjustment actuator (151), configured for adjusting the rest position (PR) of each clamping tool (13).

7. The clamping unit (1) according to claim 6, wherein the adjustment unit (15) is configured for selectively and independently adjusting the working position (PR) of each clamping tool (13).

8. The clamping unit (1) according to claim 6 or 7, comprising a calibrating unit (17), configured for detecting when each clamping tool (13) reaches a reference position, and wherein the calibrating unit (17) is configured for sending to a control unit (4) of the machine (1000) a reset signal, to associate a coordinate corresponding to the reference position with the respective clamping tool (13).

9. The clamping unit (1) according to any one of the preceding claims, wherein the clamping actuator (14) is an abutment actuator, comprising a start position, corresponding to the rest position (PR) of the plurality of clamping tools (13), and an abutment position, corresponding to the working position (PL) of the plurality of clamping tools (13), so as to define a maximum radial travel of the clamping tools (13), and wherein the clamping tools (13) reach their respective working positions (PL) when the clamping actuator reaches:
(a) the abutment position or
(b) the maximum deliverable power.

10. The clamping unit (1) according to any one of the preceding claims, comprising a component detecting unit (16), configured for:
- detecting the presence of the tubular component (C) in a clamping zone of the clamping chuck (10);
- generating a presence signal, representing the presence of the tubular component (C) in the clamping zone;
- sending the presence signal to a control unit (4) of the machine (1000),
wherein the clamping actuator (14) is configured for receiving an enabling signal from the control unit (4) to enable or inhibit its actuation based on the presence signal.

11. A laser cutting machine (1000) comprising:
- a clamping unit (1) according to any one of the preceding claims;
- a working unit (3), comprising a cutting device which comprises a laser head (31), configured for cutting the tubular component (C);
- a control unit (4), configured for controlling the working unit (3) and one or more actuators (11, 14) of the clamping unit (1).

12. The machine (1000) according to claim 11, wherein the working unit (3) is movable along an axial direction (A) parallel to the axis of rotation (A1), wherein the cutting device is movable along the radial direction (R) towards and away from the tubular component (C);
wherein the working unit (3) comprises a detecting unit (32), including at least one sensor (321, 322, 323), configured for capturing a detection signal, representing:
- a distance along a detecting direction (DR1, DR2, DR3) of the at least one sensor (321, 322, 323) from the tubular component (C) and/or
- a position of the tubular component (C) relative to the cutting device , and wherein the detecting unit (32) moves along the axial direction (A) as one with the cutting device , to perform detection at the axial coordinate where the cutting device operates.

13. A method for holding a tubular component (C) while it is being cut with a laser cutting machine (1000), the method comprising the following steps:
- rotating a clamping chuck (10) about an axis of rotation (A1) to set the tubular component (C) in rotation by means of a rotary actuator (11);
- providing a plurality of clamping tools (13), each including a first end, connected to the clamping chuck (10), and a second, free end, opposite the first end along an axial direction (A) parallel to the axis of rotation (A1),
- moving the clamping tools (13) of the plurality towards and away from each other along a radial direction (R) perpendicular to the axis of rotation (A1) between a respective rest position (PR), where the clamping tool (13) is radially spaced from the axis of rotation (A1) by a first distance (D1, D1'), and a working position (PL), where the clamping tool (13) engages the tubular component (C) and is spaced from the axis of rotation (A1) by a second distance (D2, D2'), smaller than the first distance (D1, D1');
- clamping the tubular component (C) by applying a clamping force (FP) to the tubular component;
**characterized in that** the clamping force (FP) includes at least one component along the axial direction (A) having a clamping sense (V1) towards the inside of the clamping chuck (10).

## Patentansprüche

1. Spanneinheit (1) für eine Laserschneidemaschine (1000) zum Schneiden einer rohrförmigen Komponente (C), wobei die Spanneinheit (1) Folgendes umfasst:
- ein Spannfutter (10), das ausgelegt ist, um sich um eine jeweilige Rotationsachse (A1) zu drehen und die rohrförmige Komponente (C) in Drehung einzukuppeln;
- einen rotatorischen Aktuator (11), der ausgelegt ist, um das Spannfutter (10) in Drehung zu versetzen;
- eine Vielzahl von Spannwerkzeugen (13), wobei ein jedes ein erstes Ende, das mit dem Spannfutter (10) verbunden ist, und ein zweites, freies Ende, das dem ersten Ende entgegengesetzt ist, entlang einer axialen Richtung (A) parallel zur Rotationsachse (A1) einschließt,
wobei die Werkzeuge der Vielzahl (13) hinführend zueinander und wegführend voneinander entlang einer radialen Richtung (R) senkrecht zur Rotationsachse (A1) zwischen einer jeweiligen Ruheposition (PR), in der das Werkzeug (13) radial von der Rotationsachse (A1) um einen ersten Abstand (D1, D1') beabstandet ist, und einer Arbeitsposition (PL), in der das Werkzeug (13) die rohrförmige Komponente (C) greift und von der Rotationsachse (A1) um einen zweiten Abstand (D2, D2') beabstandet ist, der kleiner ist als der erste Abstand (D1, D1'), bewegbar sind;
- einen Spannaktuator (14), der ausgelegt ist, um die Vielzahl von Werkzeugen (13) zwischen der Ruheposition (PR) und der Arbeitsposition (PL) zu bewegen,
**dadurch gekennzeichnet, dass** ein jedes Werkzeug (13) ausgelegt ist, um eine Spannkraft (FP) auf die rohrförmige Komponente (C) auszuüben, einschließend mindestens eine Komponente entlang der axialen Richtung (A), aufweisend eine Spannrichtung (V1) hinführend zur Innenseite des Spannfutters (10).

2. Spanneinheit (1) nach Anspruch 1, wobei ein jedes Spannwerkzeug (13) ein jeweiliges Kontaktelement (131) umfasst, das ausgelegt ist, um die rohrförmige Komponente (C) zu berühren, und wobei das Kontaktelement (131) eine Hauptausdehnungsachse (L1) aufweist, die an der Arbeitsposition (PL) des jeweiligen Spannwerkzeugs (13) mit der Rotationsachse (A1) in der Spannrichtung (V1) zusammenläuft.

3. Spanneinheit (1) nach Anspruch 2, wobei das Spannfutter (10) einen Körper umfasst, und wobei ein jedes Spannwerkzeug (13) am Körper des Spannfutters (10) an einem jeweiligen ersten Gelenk (132) angelenkt ist, um sich zwischen der jeweiligen Ruheposition (PR) und der jeweiligen Arbeitsposition (PL) um eine jeweilige Tangentialachse, die senkrecht zur Rotationsachse (A1) und zur radialen Richtung (R) verläuft, zu drehen.

4. Spanneinheit (1) nach Anspruch 3, umfassend für ein jedes Spannwerkzeug (13) eine entsprechende Antriebseinheit (134), einschließend eine Antriebsstange (1341), die entlang der radialen Richtung (A) unter der Wirkung des Spannaktuators (14) bewegbar ist, und wobei eine Verschiebung einer jeden Antriebsstange (1341) eine entsprechende Drehung des jeweiligen Kontaktelements (131) um das entsprechende erste Gelenk (132) herbeiführt.

5. Spanneinheit nach Anspruch 4, wobei die Antriebseinheit (134) für jede Antriebsstange (1341) Folgendes umfasst:
- eine jeweilige Führungsbahn (1343), die ausgelegt ist, um eine axiale Verschiebung der Antriebsstange (1341) zu führen;
- eine jeweilige Verbindungsstange (1342), die mit dem Kontaktelement (131) und der sich verschiebenden Antriebsstange (1341) verbunden ist, um die axiale Verschiebung der Antriebsstange (1341) in eine Drehung des Kontaktelements (131) umzuwandeln.

6. Spanneinheit (1) nach einem der vorhergehenden Ansprüche, umfassend eine Einstelleinheit (15), einschließend mindestens einen Einstellaktuator (151), der ausgelegt ist, um die Ruheposition (PR) eines jeden Spannwerkzeugs (13) einzustellen.

7. Spanneinheit (1) nach Anspruch 6, wobei die Einstelleinheit (15) ausgelegt ist, um die Arbeitsposition (PR) eines jeden Spannwerkzeugs (13) selektiv und unabhängig einzustellen.

8. Spanneinheit (1) nach Anspruch 6 oder 7, umfassend eine Kalibriereinheit (17), die ausgelegt ist, um zu erkennen, wann ein jedes Spannwerkzeug (13) eine Referenzposition erreicht, und wobei die Kalibriereinheit (17) ausgelegt ist, um einer Steuereinheit (4) der Maschine (1000) ein Reset-Signal zu senden, um eine Koordinate, die der Referenzposition entspricht, mit dem jeweiligen Spannwerkzeug (13) zu verknüpfen.

9. Spanneinheit (1) nach einem der vorhergehenden Ansprüche, wobei der Spannaktuator (14) ein Anschlagsaktuator ist, umfassend eine Startposition, die der Ruheposition (PR) der Vielzahl von Spannwerkzeugen (13) entspricht, und eine Anschlagsposition, die der Arbeitsposition (PL) der Vielzahl von Spannwerkzeugen (13) entspricht, sodass ein maximaler radialer Weg der Spannwerkzeuge (13) definiert wird, und wobei die Spannwerkzeuge (13) ihre jeweiligen Arbeitspositionen (PL) erreichen, wenn der Spannaktuator Folgendes erreicht:
(a) die Anschlagsposition oder
(b) die maximale Versorgungsleistung.

10. Spanneinheit (1) nach einem der vorhergehenden Ansprüche, umfassend eine Komponentenerkennungseinheit (16), die ausgelegt ist, um
- die Anwesenheit der rohrförmigen Komponente (C) in einer Spannzone des Spannfutters (10) zu erkennen;
- ein Anwesenheitssignal zu generieren, das die Anwesenheit der rohrförmigen Komponente (C) in der Spannzone repräsentiert;
- das Anwesenheitssignal an eine Steuereinheit (4) der Maschine (1000) zu senden,
wobei der Spannaktuator (14) ausgelegt ist, um ein Freigabesignal von der Steuereinheit (4) zu empfangen, um deren Betätigung basierend auf dem Anwesenheitssignal freizugeben oder zu hemmen.

11. Laserschneidemaschine (1000), umfassend:
- eine Spanneinheit (1) nach einem der vorhergehenden Ansprüche;
- eine Arbeitseinheit (3), umfassend eine Schneidevorrichtung, die einen Laserkopf (31) umfasst, ausgelegt, um die rohrförmige Komponente (C) zu schneiden;
- eine Steuereinheit (4), die ausgelegt ist, um die Arbeitseinheit (3) und einen oder mehrere Aktuatoren (11, 14) der Spanneinheit (1) zu steuern.

12. Maschine (1000) nach Anspruch 11, wobei die Arbeitseinheit (3) entlang einer axialen Richtung (A) parallel zur Rotationsachse (A1) bewegbar ist, wobei die Schneidevorrichtung entlang der radialen Richtung (R) hinführend zur und wegführend von der rohrförmigen Komponente (C) bewegbar ist,
wobei die Arbeitseinheit (3) eine Erkennungseinheit (32) umfasst, einschließend mindestens einen Sensor (321, 322, 323), ausgelegt, um ein Erkennungssignal zu erfassen, das Folgendes repräsentiert:
- einen Abstand entlang einer Erkennungsrichtung (DR1, DR2, DR3) des mindestens einen Sensors (321, 322, 323) von der rohrförmigen Komponente (C) und/oder
- eine Position der rohrförmigen Komponente (C) relativ zur Schneidevorrichtung, und wobei sich die Erkennungseinheit (32) entlang der axialen Richtung (A) einstückig mit der Schneidevorrichtung bewegt, um die Erkennung an der axialen Koordinate, an der die Schneidevorrichtung arbeitet, durchzuführen.

13. Verfahren zum Halten einer rohrförmigen Komponente (C), während diese mit einer Laserschneidemaschine (1000) geschnitten wird, wobei das Verfahren die folgenden Schritte umfasst:
- Drehen eines Spannfutters (10) um eine Rotationsachse (A1), um die rohrförmige Komponente (C) mittels eines rotatorischen Aktuators (11) in Drehung zu versetzen;
- Bereitstellen einer Vielzahl von Spannwerkzeugen (13), wobei ein jedes ein erstes Ende, das mit dem Spannfutter (10) verbunden ist, und ein zweites, freies Ende, das dem ersten Ende entgegengesetzt ist, entlang einer axialen Richtung (A) parallel zur Rotationsachse (A1) einschließt;
- Bewegen der Spannwerkzeuge (13) der Vielzahl hinführend zueinander und wegführend voneinander entlang einer radialen Richtung (R) senkrecht zur Rotationsachse (A1) zwischen einer jeweiligen Ruheposition (PR), in der das Spannwerkzeug (13) radial von der Rotationsachse (A1) um einen ersten Abstand (D1, D1') beabstandet ist, und einer Arbeitsposition (PL), in der das Spannwerkzeug (13) die rohrförmige Komponente (C) greift und von der Rotationsachse (A1) um einen zweiten Abstand (D2, D2') beabstandet ist, der kleiner ist als der erste Abstand (D1, D1');
- Spannen der rohrförmigen Komponente (C) durch Ausüben einer Spannkraft (FP) auf die rohrförmige Komponente, **dadurch gekennzeichnet, dass** die Spannkraft (FP) mindestens eine Komponente entlang der axialen Richtung (A) einschließt, aufweisend eine Spannrichtung (V1) hinführend zur Innenseite des Spannfutters (10).

## Revendications

1. Unité de serrage (1) pour une machine de coupe au laser (1000) pour couper un composant tubulaire (C), l'unité de serrage (1) comprenant :
- un mandrin de serrage (10), configuré pour tourner autour d'un axe de rotation respectif (A1) et pour entraîner le composant tubulaire (C) en rotation ;
- un actionneur rotatif (11), configuré pour mettre le mandrin de serrage (10) en rotation ;
- une pluralité d'outils de serrage (13), incluant chacun une première extrémité, reliée au mandrin de serrage (10), et une seconde extrémité, libre, opposée à la première extrémité, selon une direction axiale (A) parallèle à l'axe de rotation (A1),
les outils de la pluralité (13) étant mobiles l'un vers l'autre et l'un éloigné de l'autre le long d'une direction radiale (R) perpendiculaire à l'axe de rotation (A1) entre une position de repos respective (PR), où l'outil (13) est radialement espacé de l'axe de rotation (A1) par une première distance (D1, D1'), et une position de travail (PL), où l'outil (13) s'engage dans le composant tubulaire (C) et est espacé de l'axe de rotation (A1) par une seconde distance (D2, D2'), plus petite que la première distance (D1, D1') ;
- un actionneur de serrage (14), configuré pour déplacer la pluralité d'outils (13) entre la position de repos (PR) et la position de travail (PL),
**caractérisée en ce que** chaque outil (13) est configuré pour appliquer une force de serrage (FP) sur le composant tubulaire (C) incluant au moins un composant le long de la direction axiale (A) ayant un sens de serrage (V1) vers l'intérieur du mandrin de serrage (10).

2. Unité de serrage (1) selon la revendication 1, dans laquelle chaque outil de serrage (13) comprend un élément de contact respectif (131), configuré pour entrer en contact avec le composant tubulaire (C), et dans laquelle l'élément de contact (131) a un axe principal d'extension (L1) qui, dans la position de travail (PL) de l'outil de serrage respectif (13), converge avec l'axe de rotation (A1) dans le sens de serrage (V1).

3. Unité de serrage (1) selon la revendication 2, dans laquelle le mandrin de serrage (10) comprend un corps et dans laquelle chaque outil de serrage (13) est articulé au corps du mandrin de serrage (10) au niveau d'une première articulation respective (132), pour tourner entre la position de repos respective (PR) et la position de travail respective (PL) autour d'un axe tangentiel respectif, perpendiculaire à l'axe de rotation (A1) et à la direction radiale (R).

4. Unité de serrage (1) selon la revendication 3, comprenant, pour chaque outil de serrage (13), une unité de transmission correspondante (134), incluant une tige d'entraînement (1341), mobile le long de la direction axiale (A) sous l'action de l'actionneur de serrage (14), et dans laquelle un déplacement de chaque tige d'entraînement (1341) provoque une rotation correspondante de l'élément de contact respectif (131) autour de la première charnière correspondante (132).

5. Unité de serrage selon la revendication 4, dans laquelle l'unité de transmission (134) comprend, pour chaque tige d'entraînement (1341) :
- une glissière respective (1343) configurée pour guider un déplacement axial de la tige d'entraînement (1341) ;
- une bielle respective (1342), reliée à l'élément de contact (131) et à la tige d'entraînement coulissante (1341), pour convertir le déplacement axial de la tige d'entraînement (1341) en une rotation de l'élément de contact (131).

6. Unité de serrage (1) selon l'une quelconque des revendications précédentes, comprenant une unité de réglage (15), incluant au moins un actionneur de réglage (151), configuré pour régler la position de repos (PR) de chaque outil de serrage (13).

7. Unité de serrage (1) selon la revendication 6, dans laquelle l'unité de réglage (15) est configurée pour régler sélectivement et indépendamment la position de travail (PR) de chaque outil de serrage (13).

8. Unité de serrage (1) selon la revendication 6 ou 7, comprenant une unité de calibrage (17), configurée pour détecter lorsque chaque outil de serrage (13) atteint une position de référence, et dans laquelle l'unité de calibrage (17) est configurée pour envoyer à une unité de contrôle (4) de la machine (1000) un signal de réinitialisation, pour associer une coordonnée correspondant à la position de référence à l'outil de serrage respectif (13).

9. Unité de serrage (1) selon l'une quelconque des revendications précédentes, dans laquelle l'actionneur de serrage (14) est un actionneur de butée, comprenant une position de départ, correspondant à la position de repos (PR) de la pluralité d'outils de serrage (13), et une position de butée, correspondant à la position de travail (PL) de la pluralité d'outils de serrage (13), de manière à définir une course radiale maximale des outils de serrage (13), et dans laquelle les outils de serrage (13) atteignent leurs positions de travail respectives (PL) lorsque l'actionneur de serrage atteint :
(a) la position de butée ou
(b) la puissance maximale délivrable.

10. Unité de serrage (1) selon l'une quelconque des revendications précédentes, comprenant une unité de détection de composant (16), configurée pour :
- détecter la présence du composant tubulaire (C) dans une zone de serrage du mandrin de serrage (10) ;
- générer un signal de présence, représentatif de la présence du composant tubulaire (C) dans la zone de serrage ;
- envoyer le signal de présence à une unité de contrôle (4) de la machine (1000),
dans laquelle l'actionneur de serrage (14) est configuré pour recevoir un signal d'activation provenant de l'unité de contrôle (4) pour activer ou inhiber son actionnement sur la base du signal de présence.

11. Machine de coupe au laser (1000), comprenant :
- une unité de serrage (1) selon l'une quelconque des revendications précédentes ;
- une unité de travail (3), comprenant un dispositif de coupe qui comprend une tête laser (31), configurée pour couper le composant tubulaire (C) ;
- une unité de contrôle (4), configurée pour contrôler l'unité de travail (3) et un ou plusieurs actionneurs (11, 14) de l'unité de serrage (1).

12. Machine (1000) selon la revendication 11, dans laquelle l'unité de travail (3) est mobile le long d'une direction axiale (A) parallèle à l'axe de rotation (A1), dans laquelle le dispositif de coupe est mobile le long de la direction radiale (R) vers et éloigné du composant tubulaire (C) ;
dans laquelle l'unité de travail (3) comprend une unité de détection (32), incluant au moins un capteur (321, 322, 323), configurée pour capturer un signal de détection, représentant :
- une distance le long d'une direction de détection (DR1, DR2, DR3) de l'au moins un capteur (321, 322, 323) à partir du composant tubulaire (C) et/ou
- une position du composant tubulaire (C) par rapport au dispositif de coupe et dans laquelle l'unité de détection (32) se déplace le long de la direction axiale (A) d'un seul tenant avec le dispositif de coupe, pour effectuer une détection au niveau de la coordonnée axiale où le dispositif de coupe fonctionne.

13. Procédé pour maintenir un composant tubulaire (C) pendant qu'il est coupé avec une machine de coupe au laser (1000), le procédé comprenant les étapes suivantes :
- faire tourner un mandrin de serrage (10) autour d'un axe de rotation (A1) pour mettre en rotation le composant tubulaire (C) au moyen d'un actionneur rotatif (11) ;
- fournir une pluralité d'outils de serrage (13), incluant chacun une première extrémité, reliée au mandrin de serrage (10), et une seconde extrémité, libre, opposée à la première extrémité, selon une direction axiale (A) parallèle à l'axe de rotation (A1),
- déplacer les outils de serrage (13) de la pluralité vers et éloignés les uns des autres le long d'une direction radiale (R) perpendiculaire à l'axe de rotation (A1) entre une position de repos respective (PR), où l'outil de serrage (13) est espacé radialement de l'axe de rotation (A1) par une première distance (D1, D1'), et une position de travail (PL), où l'outil de serrage (13) s'engage dans le composant tubulaire (C) et est espacé de l'axe de rotation (A1) par une seconde distance (D2, D2'), inférieure à la première distance (D1, D1'),
- serrer le composant tubulaire (C) en appliquant une force de serrage (FP) au composant tubulaire ;
**caractérisé en ce que** la force de serrage (FP) inclut au moins un composant le long de la direction axiale (A) ayant un sens de serrage (V1) vers l'intérieur du mandrin de serrage (10).
